# EUROPÄISCHE PATENTSCHRIFT

(11) **EP 2 353 345 B1**
(45) Veröffentlichungstag und Bekanntmachung des Hinweises auf die Patenterteilung: **28.02.2018**
(21) Anmeldenummer: 09768493.0
(22) Anmeldetag: 13.11.2009
(51) Int. Cl.: H05B 33/08

(54) **ADAPTIVER PFC FÜR LEUCHTMITTEL-LASTKREIS, INSBESONDERE LASTKREIS MIT LED**
ADAPTIVE PFC FOR A LIGHTING MEANS LOAD CIRCUIT, IN PARTICULAR FOR A LOAD CIRCUIT WITH AN LED
CIRCUIT PFC ADAPTATIF POUR CIRCUIT DE CHARGE D'UN LUMINAIRE, EN PARTICULIER UN CIRCUIT DE CHARGE AVEC DIODES DEL

(30) Priorität: 14.11.2008 DE 102008057333
(43) Veröffentlichungstag der Anmeldung: 10.08.2011
(73) Patentinhaber: Tridonic GmbH & Co KG, 6851 Dornbirn (AT)
(72) Erfinder: ZIMMERMANN, Michael, CH-8888 Heiligkreuz (CH); COMBET, Dominique, CH-8750 Glarus (CH)
(74) Vertreter: Rupp, Christian
(86) Internationale Anmeldenummer: PCT/EP2009/008106
(87) Internationale Veröffentlichungsnummer: WO 2010/054834

(56) Entgegenhaltungen:
- WO-A2-2008/112820
- US-A1- 2005 218 838
- US-A1- 2008 018 261
- US-A1- 2008 224 629

## Beschreibung

Die Erfindung bezieht sich allgemein auf Schaltungen zum Betrieb von Leuchtmitteln, wie beispielsweise Gasentladungslampen oder anorganischen oder organischen LEDs.
Bei vielen Betriebsgeräten für Leuchtmittel ist es üblich, dass die Leuchtmittel entweder hochfrequent (insbesondere bei Gasentladungslampen) oder aber durch PWM-Modulation (beispielsweise insbesondere bei LEDs) betrieben werden. Dazu sind sogenannte Treiberschaltungen vorgesehen, die beispielsweise in Form eines PWM-Modulators, einer Voll- oder Halbbrückenschaltung, etc. ausgebildet sein können. Diesen Treiberschaltungen wird üblicherweise eine DC-Versorgungsspannung zugeführt, der ggf. ein sogenannter Ripple überlagert sein kann.

Zur Bereitstellung dieser DC-Versorgungsspannung wird oft eine sogenannte PFC-Schaltung (Power Factor Correction) als aktive Leistungsfaktorkorrekturschaltung verwendet (wie in Dokumente WO2008/112820 und US2008/0224629 beschrieben ist). Diese PFC-Schaltung erzeugt also die DC-Versorgungsspannung ausgehend von einer üblicherweise gleichgerichteten Netzversorgungsspannung.
Im Rahmen der vorliegenden Erfindung handelt es sich dabei stets um sogenannte aktiv getaktete PFC-Schaltungen, also Schaltungen, bei denen die Leistungsaufnahme der PFC-Schaltung durch Taktung eines Schaltelements, wie beispielsweise eine Transistors vorgegeben wird.
Bei geschlossenem Schaltelement wird dabei eine Induktivität aufmagnetisiert, die sich dann bei geöffnetem Schalter über eine Diode in einen Speicherkondensator entlädt (entmagnetisiert). Die PFC-Schaltung kann beispielsweise als Hochsetzsteller, Sperrwandler oder auch isolierter Sperrwandler (in diesem Falle weist die Induktivität eine Sekundärwicklung auf, über die die Entmagnetisierung der Induktivität über eine Diode in einen Speicherkondensator erfolgt).

Eine gewisse Problematik entsteht, wenn sich die Lastaufnahme des an dem Ausgang der PFC-Schaltung angeschlossenen Lastkreises (aufweisend die Treiberschaltung und die Leuchtmittel) sehr stark verändern kann, was insbesondere der Fall ist, wenn die angeschlossenen Leuchtmittel auf sehr niedrige Dimmwerte (beispielsweise 1% oder weniger der Nennleistung) gedimmt werden. Insbesondere LEDs können auf einen Bereich weiter unter 1% Nennleistung gedimmt werden.

Bei diesem stark gedimmten Betrieb wechselt die PFC-Schaltung automatisch und ungesteuert gemäss dem Stand der Technik in einen sogenannten Burst-Modus, bei dem sich die Schaltung mit relativ niedriger Frequenz ein- und ausschaltet, um ein unzulässiges übermäßiges Ansteigen der Ausgangsspannung der PFC-Schaltung zu vermeiden. Dieser Burst-Modus (Ein- und Ausschalten) hat eine sehr niedrige Frequenz und verursacht indessen unterschiedliche Probleme, wie beispielsweise die Instabilität der DC-Versorgungsspannung für die angeschlossene Treiberschaltung, akustische Probleme, ggf. Flackern der Leuchtmittel etc.

Es ist Aufgabe der vorliegenden Erfindung, eine aktiv getaktete PFC-Schaltung hinsichtlich ihres Verhaltens bei unterschiedlicher Lastaufnahme an ihrem Ausgang zu verbessern.

Eine weitere Aufgabe der Erfindung ist es, die Stabilität der aktiv getakteten PFC-Schaltung und somit des gesamten Betriebsgeräts für verschiedene Lastbedingungen und gegenüber Schwankungen oder Änderungen der Eingangsspannung zu verbessern.

Diese Aufgabe wird erfindungsgemäss gelöst durch die Merkmale der unabhängigen Ansprüche. Die abhängigen Ansprüche bilden den zentralen Gedanken der Erfindung in besonders vorteilhafter Weise weiter.

Ein erster Aspekt der Erfindung bezieht sich auf ein Verfahren zum Betrieb einer aktiv getakteten PFC-Schaltung mit direkt oder indirekt angeschlossenem Lastkreis am Ausgang der PFC-Schaltung. Der Lastkreis weist dabei ein Leuchtmittel, insbesondere eine oder mehrere LEDs, auf. Der PFC-Schaltung wird wenigstens ein die Leistungsaufnahme des Lastkreises wiedergebendes Messignal oder ein die Leistungsaufnahme angebendes externes Steuersignal zugeführt. Eine Steuerschaltung stellt kontinuierlich oder vorzugweise in zwei oder mehr Stufen die Betriebsweise der PFC-Schaltung abhängig von dem Steuersignal bzw. Messignal ein.

Dabei kann ein Dimmen, vorzugsweise bis unterhalb 1% der Nennleistung, vorgesehen werden, insbesondere bei LEDs als Leuchtmitteln.

Die Betriebsweise der PFC-Schaltung kann bspw. durch Änderung von Zeitkonstanten oder Referenzen der PFC-Schaltung verändert werden.

Die Zeitkonstanten können dabei die Zeitkonstanten einer Regelung der Taktung eines Schalters der PFC-Schaltung sein. Vorzugsweise wird dabei bei niedriger Leistungsaufnahme des Lastkreises die Regelung verlangsamt.

Bei niedriger Leistungsaufnahme des Lastkreises kann die Taktung eines Schalters der PFC-Schaltung mit Impulspausen erfolgen ("Discontinous Mode" oder lückender Strombetrieb).

Die PFC-Schaltung kann ausgehend von einer Netzspannung betrieben werden. Bei niedriger Leistungsaufnahme des Lastkreises wird die PFC-Schaltung gezielt nur während Zeitdauern betrieben, in denen die Netzspannungsamplitude hoch und vorzugsweise grösser als ein direkt oder indirekt gegebener Schwellenwert ist.

Wenn die PFC-Schaltung ausgehend von einer Netzspannung betrieben wird, kann bei niedriger Leistungsaufnahme des Lastkreises die PFC-Schaltung mit einem Impulszug getaktet werden, der zeitlich im Bereich des Scheitels der Netzspannung gestartet wird.

Der Impulszug kann dabei bspw. vor Erreichen des Nulldurchgangs der Netzspannung gestoppt werden, wobei bis zum nächstfolgenden Impulszug eine Pause eingelegt wird.

Die Taktung der PFC-Schaltung kann mit der Netzspannung synchronisiert werden. Vorzugsweise kann die Taktung der PFC-Schaltung abhängig von einem Signal (als Sollwertvorgabe), welches aus der Netzspannung abgeleitet oder zur Netzspannung synchronisiert wird, erfolgen.

Die Betriebsweise der PFC-Schaltung kann durch Änderung einer Sollwertvorgabe für die über die Taktung der PFC-Schaltung als Stellgrösse geregelte Ausgangsspannung der PFC-Schaltung verändert werden.

Wenn das Messignal bzw. Steuersignal eine Lastkreis-Leistungsaufnahme wiedergibt, die unterhalb eines vorgegebenen Schwellenwerts liegt, kann die Betriebsweise der PFC-Schaltung in einem diskreten Schritt verändert werden.

Der Lastkreis kann eine getaktete Treiberschaltung aufweisen, deren Taktung mit der Taktung der PFC-Schaltung synchronisiert werden kann

Die Treiberschaltung kann dabei PWM-moduliert sein und die Einschaltzeitdauer des Duty Cycles der Treiberschaltung nur in Perioden erfolgen, in denen die PFC-Schaltung mit Impulszügen aktiv getaktet ist, aber nicht in den Impulspausen zwischen zwei Impulszügen.

Ein weiterer Aspekt der Erfindung bezieht sich auf eine Integrierte Steuerschaltung, insbesondere ASIC oder Mikrokontroller, die zum Lastadaptiven Betrieb einer PFC-Schaltung ausgebildet ist.

Ein noch weiterer Aspekt der Erfindung bezieht sich auf ein Betriebsgerät für Leuchtmittel, insbesondere für eine oder mehrere LEDs, aufweisend eine Steuerschaltung, die adaptiv, d.h. lastabhängig oder abhängig vom einem Dimmsignal eine PFC-Schaltung betreibt, an die wiederum eine vorzugsweise getaktete LED-Treiberschaltung angeschlossen ist.

Das Betriebsgerät ist insbesondere ein dimmbares Gerät, dem bspw. (digitale) Dimmsignale über einen vorzugsweise externen Anschluss, insbesondere eine Busleitung oder über die Netzleitung zuführbar sind. Dabei kann ein Dimmen unterhalb von 1% Nennleistung vorgesehen sein.
Ein weiterer Aspekt der Erfindung bezieht sich auf ein Betriebsgerät für Leuchtmittel, insbesondere für eine oder mehrere LEDs, aufweisend eine aktive getaktete PFC-Schaltung, und einen direkt oder indirekt am Ausgang der PFC-Schaltung angeschlossenen Lastkreis, wobei der Lastkreis ein Leuchtmittel, insbesondere eine oder mehrere LEDs aufweist, wobei der PFC-Schaltung wenigstens ein die Leistungsaufnahme des Lastkreises wiedergebendes Messignal oder ein die Leistungsaufnahme angebendes externes Steuersignal zugeführt ist, und eine Steuerschaltung dazu ausgebildet ist, kontinuierlich oder vorzugweise in zwei oder mehr Stufen die Betriebsweise der PFC-Schaltung abhängig von dem Steuersignal bzw. Messignal einzustellen und/ oder zu beeinflußen.

Es kann die Wahl der Betriebsweise beziehungsweise die Beeinflussung der Betriebsweise durch eine zusätzliche Signalaufschaltung an dem Multipliziereingang der Kontrolleinheit bzw. der PFC-Regelung der PFC Schaltung erfolgen.

Weitere Aspekte, Merkmale und Eigenschaften der vorliegenden Erfindung werden aus der folgenden Beschreibung beispielhafter Ausführungsbeispiele und anhand der Figuren der begleitenden Zeichnungen näher erläutert.
- Figur 1: zeigt dabei schematisch ein Betriebsgerät mit adaptiver PFC-Schaltung gemäß der vorliegenden Erfindung, und
- Fig.2: zeigt im Detail einen beispielsweisen Aufbau einer PFC-Schaltung mit einem Lastkreis mit einem LED-Treiber (Konverter) und LEDs als Leuchtmitteln.
- Fig.3: zeigt im Detail einen weiteren beispielsweisen Aufbau einer PFC-Schaltung mit einem Lastkreis mit einem LED-Treiber (Konverter) und LEDs als Leuchtmittel.

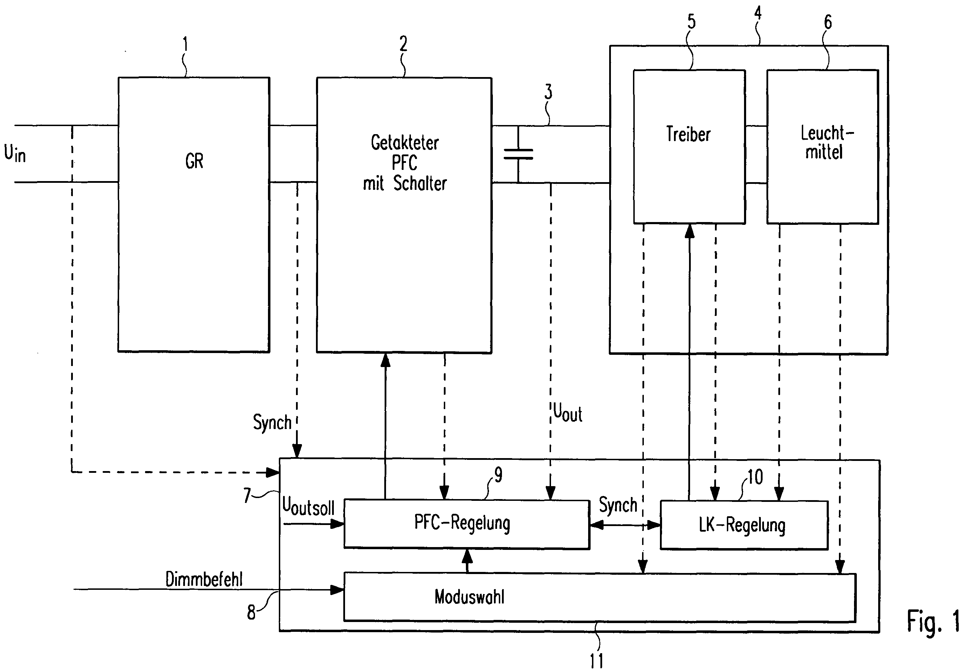

Wie in Figur 1 ersichtlich, werden Leuchtmittel 6 ausgehend von einer Spannung Uᵢₙ versorgt, die insbesondere eine Netzwechselspannung sein kann. Diese Netzwechselspannung Uᵢₙ wird ggf. gefiltert und dann einem Gleichrichter 1 zugeführt. Die gleichgerichtete Wechselspannung wird dann einer getakteten PFC-Schaltung 2 zugeführt. An deren Ausgang wird oft ein Elektrolyt-Speicherkondensator 3 zur Stabilisierung der Ausgangsspannung Uₒᵤₜ angeschlossen. Diese Spannung Uₒᵤₜ ist eine DC-Versorgungsspannung, die wiederum dann einem Lastkreis 4 zugeführt ist, der insbesondere eine Treiberschaltung (Konverter) 5 sowie die zu versorgenden Leuchtmittel 6 aufweist.

Weiterhin ist erfindungsgemäß vorgesehen eine Steuerschaltung 7, die insbesondere als integrierte Schaltung wie beispielsweise ein ASIC, ein Mikrocontroller oder ein Hybridlösung davon ausgebildet sein kann. Es ist anzumerken, dass die innerhalb der Steuerschaltung 7 in Figur 1 dargestellten Blöcke nur logisch zusammenhängend angeordnet sind, aber durchaus auf unterschiedliche Module verteilt sein können.

Die Steuerschaltung 7 kann aufweisen eine PFC-Regelung 9, der Rückführsignale aus dem Bereich der Eingangsspannung Uᵢₙ, dem Bereich des PFCs (beispielsweise Schalterstrom) sowie die Ausgangsspannung Uout zugeführt werden. Der PFC-Regelung kann weiterhin ein Sollwert für die Ausgangsspannung Uₒᵤₜₛₒₗₗ zugeführt, wobei die PFC-Regelung 9 dann beispielsweise die Taktung, insbesondere den sogenannten duty cycle des Schalters des PFC 2 als Steuergröße zur Regelung der Ausgangsspannung Uₒᵤₜ auf die Sollwertvorgabe Uₒᵤₜₛₒₗₗ verwenden kann.

Weiterhin kann in der Steuerschaltung 7 vorgesehen sein eine Lastkreisregelung 10. Dieser Lastkreisregelung 10 können Messsignale aus dem Bereich der Treiberschaltung 5 wie auch aus dem Bereich der Leuchtmittel (Leuchtmittelspannung, Leuchtmittelstrom, Leuchtmittelleistung, Leuchtmittelhellligkeit etc.) zugeführt werden. Die Lastkreisregelung 10 kann dann üblicherweise eine Taktung von Schaltern der Treiberschaltung 5 als Steuergröße verwenden, um beispielsweise einen die Leuchtmittelleistung wiedergebenden Parameter auf eine Sollwertvorgabe zu regeln. Die Lastkreisregelung 10 kann aber auch nur Messsignale aus dem Bereich der Treiberschaltung 5 erfassen und an die PFC-Regelung 9 weiterleiten.
In der Steuerschaltung 7 ist weiterhin ein logischer Block Moduswahl 11 vorgesehen, den ebenfalls Messsignale aus dem Bereich des PFCs, der Treiberschaltung 5 sowie der Leuchtmittel 6 zuführbar sind und alternativ oder zusätzlich dazu auch Informationen über eine Dimmwertvorgabe 8. Die Dimmwertvorgabe 8 kann bspw. über Dimmsignale, die über eine Busleitung oder über die Netzleitung dem Betriebsgerät zuführbar sind, erfolgen. Es können beispielsweise digitale Dimmsignale zugeführt werden. Mittels dieser Moduswahleinheit 11 kann die Betriebsweise des PFCs kontinuierlich oder schrittweise in wenigstens zwei unterschiedliche Betriebsweisen verändert werden. Beispielsweise kann abhängig von der zugeführten Dimmwertvorgabe 8 der PFC-Regelung 9 ein zusätzliches Synchronisationssignal zugeführt werden (beispielsweise nur bei Dimmwertvorgaben 8, die einen vom Maximalwert abweichenden Dimmwert vorgeben).

Grundsätzlich ist gemäß der vorliegenden Erfindung nunmehr vorgesehen, dass die PFC-Schaltung 2 bzw. die zugeordnete Steuerschaltung 7 selbsttätig (mittels Rückführsignalen) oder aber über das anliegende externe Signal erkennt, dass die Leistungsaufnahme des Lastkreises 4 gering (d.h. unterhalb eines vorgegebenen Schwellenwerts) liegt. Die PFC-Schaltung 2 wird dann hinsichtlich ihrer Betriebsweise adaptiv auf diesen erkannten Zustand (geringe Last) eingestellt.

Beispielsweise können Zeitkonstanten des PFCs wie beispielsweise das zeitliche Antwortverhalten der PFC-Regelung 9 abhängig von der Lastaufnahme des Lastkreises verändert werden. Dazu kann beispielsweise bei erkannter oder vorgegebener niedriger Leistungsaufnahme des Lastkreises 4 die Regelschleife 9 verlangsamt werden.

Eine weitere Möglichkeit ist es, dass die Moduswahleinheit 11 eine Taktung des Schalters in dem PFC 2 in Form von Impulszügen vorgibt, wobei zwischen den Impulszügen längere Impulspausen vorgesehen sind ('discontinuous mode' oder Burst-Mode).

Gemäß der Erfindung ist auch vorzugsweise vorgesehen, dass bei bekannter oder vorgegebener niedriger Leistungsaufnahme des Lastkreises 4 gezielt Einschaltzyklen (Impulszüge) selektiv nur in dem Bereich aktiviert werden, indem zeitlich gesehen die Amplitude der Eingangsspannung Uᵢₙ (Netzspannung) groß, d.h. vorzugsweise größer als ein vorgegebener Schwellenwert ist. Da also in diesem zeitlichen Bereich die Netzeingangsspannung verhältnismäßig groß ist, wird die PFC-Schaltung in diesem Zeitraum wenig Strom aufnehmen.

Erfindungsgemäß kann also der selektive Betrieb des PFCs in dem Betriebsmodus 'niedrige Last' mit der Netzeingangsspannung synchronisiert sein.

Dazu kann wie in Figur 1 schematisch dargestellt, der Steuerschaltung 7 ein Synchronisationssignal zugeleitet werden, das den Verlauf der Netzeingangsspannung oder ein davon abhängiges Signal wiedergibt, und dass vor dem Gleichrichter, zwischen dem Gleichrichter und dem PFC wie auch aus dem Bereich des PFC 2 abgeleitet sein kann. Die Veränderung der Betriebsart der PFC-Schaltung 2 für den Modus 'niedrige Last' kann auch durch ein selektives Zuschalten eines Synchronisationssignales nur in einem Modus 'niedrige Last' erfolgen.

Eine weitere Alternative oder zusätzliche Möglichkeit zur Veränderung der Betriebsart der PFC-Schaltung 2 für den Modus 'niedrige Last' ist es, beispielsweise bei niedrigen Dimmwerten die Ausgangsspannung Vₒᵤₜ der PFC-Schaltung 2 zu verringern, beispielsweise durch entsprechende Verringerung des Sollwerts für die Ausgangsspannung Uₒᵤₜₛₒₗₗ. Dieser Betriebsweise könnten die Leuchtmittel 6, insbesondere LEDs, dann sowohl über die Amplitude der Ausgangsspannung Uₒᵤₜ wie auch über die Lastkreisregelung 10, beispielsweise durch Einstellung eines Tastverhältnisses (PWM-Modulation) eines Schalters des LED-Treibers 5 eingestellt werden.

Gemäß einem noch weiteren Aspekt der Erfindung stellt sich auch die Treiberschaltung 5 adaptiv auf niedrige Dimmwerte ein. Dabei ist beispielsweise vorgesehen, dass die Einschaltflanken der Impulse einer PWM-Ansteuerung eines Schalters der Treiberschaltung 5 den Einschaltflanken oder zumindest der ersten Einschaltflanke der Impulszüge (Impulspakete) der PFC-Schaltung 2 synchronisiert sind. Dadurch ist sichergestellt, dass zum Zeitpunkt der Einschaltflanke der PWM-Ansteuerung und während der Einschaltzeitdauer der PWM-Modulation der Treiberschaltung 5 durch gleichzeitige aktive Impulspakete der PFC-Schaltung 2 eine klar definierte (und geregelte) Versorgungsspannung Uₒᵤₜ für die Treiberschaltung 5 vorliegt.

Dagegen kann zugelassen werden, dass zumindest im Bereich der Ausschaltzeitdauer der PWM-Modulation des Schalters der Treiberschaltung 5 die Versorgungsspannung Uout (Ausgangsspannung der PFC-Schaltung 2) nicht konstant ist und beispielsweise aufgrund in diesem Zeitraum nicht vorhandener Taktung der PFC-Schaltung 2 absinkt.

Die Frequenz der Impulszüge der PFC-Schaltung 2 ist vorzugsweise wesentlich größer als das doppelte der Netzfrequenz in diesem Bereich von beispielsweise mehr als 100 Hz kann dann eine etwaige Helligkeitsänderung der Leuchtmittel (Flackern) für das menschliche Auge kaum mehr wahrgenommen werden.

Die Taktung der PFC-Schaltung 2 kann mit der Netzspannung synchronisiert werden. Vorzugsweise kann die Taktung der PFC-Schaltung 2 abhängig von einem Signal (als Sollwertvorgabe), welches durch die Steuerschaltung 7 aus der Netzspannung abgeleitet oder zur Netzspannung synchronisiert wird, erfolgen. Eine Ableitung aus der Netzspannung kann insbesondere durch die Moduswahl 11 erfolgen, wenn die Dimmwertvorgabe 8 über die Netzleitung übertragen wird.

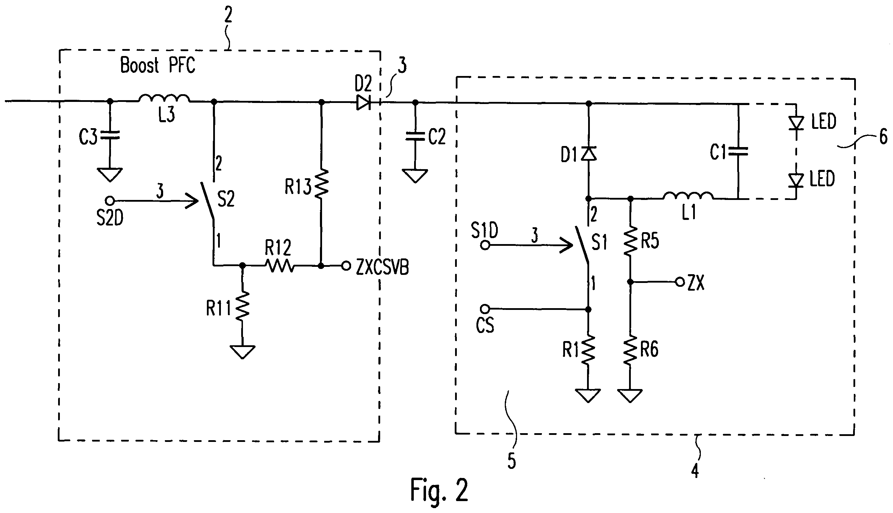

Figur 2 zeigt den Aufbau einer PFC-Schaltung 2 und einer Treiberschaltung 5 zur Versorgung von LEDs als Leuchtmittel 6.

Die PFC-Schaltung 2 weist im wesentlichen eine Induktivität L3 auf, die aufmagnetisiert wird, wenn der Schalter (Transistor) S2 auf einen Ansteuerbefehl S2D hin, der von der (vorzugsweise integrierten) Steuerschaltung 7 aus vorgegeben wird, geschlossen ist.

Wenn der Schalter S2 dann geöffnet wird, entlädt sich die Energie der aufmagnetisierten Induktivität L3 über ein Diode D2 zum Speicherkondensator C2.

An dem Pin ZXCSVB kann einerseits bei geschlossenem Schalter S2 der Spannungsabfall an dem Messwiderstand (Shunt) R11 und somit der Strom durch den Schalter S2 gemessen werden. Bei geöffnetem Schalter S2 kann die Ausgangsspannung Uₒᵤₜ an diesem Pin gemessen werden.

Der Spannungsabfall an dem Messwiderstand (Shunt) R11 und somit der Strom durch den Schalter S2 kann zusätzlich oder alternativ an dem Pin CR gemessen werden.

Die Treiberschaltung 5 weist einen weiteren Schalter S1 auf und ist als Buck-Konverter ausgeführt. Der Strom durch den Schalter S1 kann mittels eines Messwiderstands (Shunt) R1 an einem Pin CS der Steuerschaltung 7 zugeführt werden. An dem Pin S1D wird ein Steuersignal für den Schalter S1 durch die Steuerschaltung 7 ausgegeben.

Bei geschlossenem Schalter S1 fließt der Strom durch die Leuchtdioden und eine Spule L1 und steigt im Wesentlichen linear mit der Magnetisierung der Spule an. Bei ausgeschaltetem Schalter S1 baut sich die Energie der Spule L1 durch einen Stromfluss wiederum durch die LEDs und die Freilaufdiode D1 im Wesentlichen linear ab, bis der Schalter S1 schließlich wieder eingeschaltet wird. Mittels des Spannungsteilers R5, R6 kann an einem Messpunkt und Pin ZX der Zeitpunkt ermittelt werden, indem die Magnetisierung der Spule L1 im Wesentlichen abgebaut ist und somit der Strom durch den Freilaufpfad (Diode D1, LED-Strecke, L1) nicht mehr weitergetrieben wird.

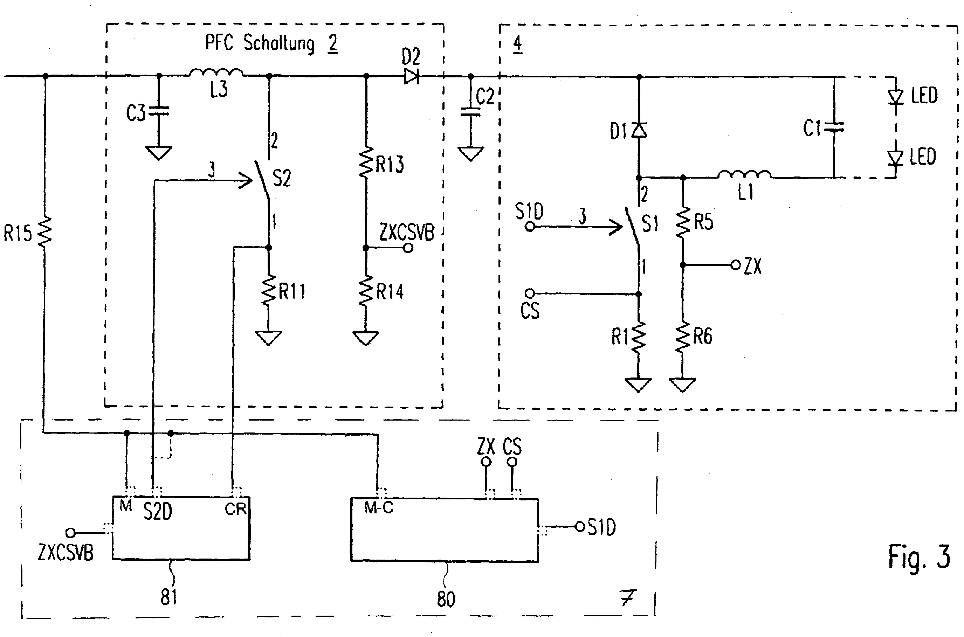

Fig. 3 zeigt eine beispielhafte Ansteuerschaltung zum Betreiben mindestens einer LED und eine Schaltung zur Leistungsfaktorkorrektur gemäß der Ausführungsbeispiele der Fig. 1 und 2, wobei die Ansteuerschaltung durch eine Steuereinheit 80 gesteuert wird.
Die Steuerschaltung 80 kann die Schaltung zur Leistungsfaktorkorrektur (PFC Schaltung 2) abhängig vom anliegenden Helligkeitsbefehl oder Lastzustand wahlweise in eine von der normalen Betriebsweise abweichende Betriebsweise versetzen. Die Steuereinheit 80 entspricht somit der Lastkreisregelung 10 in Fig. 1 und die Kontrolleinheit 81 der PFC-Regelung 9 in Fig. 1. Die Steuereinheit 80 und die Kontrolleinheit 81 bilden gemeinsam die Steuerschaltung 7.

Die PFC-Schaltung 2 weist im wesentlichen eine Induktivität L3 auf, die aufmagnetisiert wird, wenn der Schalter (Transistor) S2 auf einen Ansteuerbefehl S2D hin, der von der (vorzugsweise integrierten) Steuerschaltung 7 aus vorgegeben wird, geschlossen ist.

Wenn der Schalter S2 dann geöffnet wird, entlädt sich die Energie der aufmagnetisierten Induktivität L3 über ein Diode D2 zum Speicherkondensator C2.

An dem Pin ZXCSVB kann bei geöffnetem Schalter S2 einerseits die Ausgangsspannung Uₒᵤₜ an diesem Pin gemessen werden, andererseits kann auch der Zeitpunkt der Entmagnetisierung der Induktivität L3 festgestellt werden.

Die Treiberschaltung 5 weist einen weiteren Schalter S1 auf und ist als Buck-Konverter ausgeführt. Der Strom durch den Schalter S1 kann mittels eines Messwiderstands (Shunt) R1 an einem Pin CS der Steuerschaltung 7 zugeführt werden. An dem Pin S1D wird ein Steuersignal für den Schalter S1 durch die Steuerschaltung 7 ausgegeben.

Bei geschlossenem Schalter S1 fließt der Strom durch die Leuchtdioden und eine Spule L1 und steigt im Wesentlichen linear mit der Magnetisierung der Spule an. Bei ausgeschaltetem Schalter S1 baut sich die Energie der Spule L1 durch einen Stromfluss wiederum durch die LEDs und die Freilaufdiode D1 im Wesentlichen linear ab, bis der Schalter S1 schließlich wieder eingeschaltet wird. Mittels des Spannungsteilers R5, R6 kann an einem Messpunkt und Pin ZX der Zeitpunkt ermittelt werden, indem die Magnetisierung der Spule L1 im Wesentlichen abgebaut ist und somit der Strom durch den Freilaufpfad (Diode D1, LED-Strecke, L1) nicht mehr weitergetrieben wird.

Die Steuerschaltung 80 steuert die Treiberschaltung 5 an und kann weiterhin die Kontrolleinheit 81 der Schaltung zur Leistungsfaktorkorrektur 2 (PFC Schaltung 2) beeinflußen, beispielsweise aktivieren oder deaktivieren.

Die Steuerschaltung 80 kann aber auch nur auch nur Messsignale aus dem Bereich der Treiberschaltung 5 erfassen und entsprechend die Kontrolleinheit 81 beeinflußen.

Die Kontrolleinheit 81 führt in diesem Beispiel die PFC-Regelung durch (sie entspricht wie bereits erwähnt der PFC-Regelung 9 aus Fig. 1).

Die abweichende Betriebsweise kann ein Burst Modus (Taktung mit Impulspausen) sein. Der Burst Modus (Taktung mit Impulspausen) kann zur Netzspannung synchronisiert sein. Der Burst Modus (Taktung mit Impulspausen) kann zu einem Vielfachen der Netzspannung synchronisiert sein.

Die Beeinflussung der Kontrolleinheit 81, beispielsweise die Deaktivierung, kann durch eine zusätzliche Signalaufschaltung an einem der Erfassungsanschlüsse der Kontrolleinheit 81 der Schaltung zur Leistungsfaktorkorrektur 2 erfolgen. Die Beeinflussung der Kontrolleinheit 81 kann abhängig vom anliegenden Helligkeitsbefehl (also der Dimmwertvorgabe) oder Lastzustand sein.

Das Versetzen in die abweichende Betriebsweise kann durch eine zeitweise Deaktivierung der Schaltung zur Leistungsfaktorkorrektur erfolgen. Die Dauer der Pausen kann beim Burst Modus (Taktung mit Impulspausen) vom anliegenden Helligkeitsbefehl oder Lastzustand abhängig sein. Die Dauer der Burst-Pakete (Impulszüge) kann beim Burst Modus (Taktung mit Impulspausen) vom anliegenden Helligkeitsbefehl (also der Dimmwertvorgabe) oder Lastzustand abhängig sein. Die Dauer der Pausen kann beim Burst Modus (Taktung mit Impulspausen) mit ansteigender Helligkeit oder ansteigender Last verringert werden. Die Dauer der Burst-Pakete (Impulszüge) kann beim Burst Modus mit ansteigender Helligkeit oder ansteigender Last erhöht werden. Die Dauer der Pausen und / oder die Dauer der Burst-Pakete (Impulszüge) kann beim Burst Modus schrittweise geändert werden.

Die Wiederholrate der Burst-Pakete (Impulszüge) kann beim Burst Modus (Taktung mit Impulspausen) oberhalb der Wahrnehmbarkeitsgrenze liegen. Beispielsweise kann eine Wiederholrate im Bereich von 150Hz bis zu 450Hz gewählt werden.

Es kann die Wahl der Betriebsweise beziehungsweise die Beeinflussung der Betriebsweise durch eine zusätzliche Signalaufschaltung an dem Multipliziereingang M der Kontrolleinheit 81 der Schaltung zur Leistungsfaktorkorrektur (PFC-Schaltung) erfolgen (also an einem der Erfassungsanschlüsse der Kontrolleinheit 81). In diesem Beispiel findet die Messung mit dem Multipliziereingang M über den an die Netzspannung angeschlossenen Widerstand R15 statt, zudem wird dem Multipliziereingang M als externes Steuersignal von der Steuereinheit 80 eine Signalaufschaltung zugeführt. Über einen Steueranschluß M-C an der Steuereinheit 80 kann die Signalaufschaltung an dem Multipliziereingang M der Kontrolleinheit 81 erfolgen. Die Steuereinheit 80 kann beispielsweise über den Steueranschluß M-C oder über einen weiteren Eingang die Netzspannung, insbesondere deren Verlauf, überwachen und erfassen. Die Wahl der Betriebsweise kann somit beispielsweise durch eine Deaktivierung der Kontrolleinheit 81 erfolgen. Es kann aber auch direkt die Ansteuerung des Schalters S2 beeinflußt (beispielsweise deaktiviert) werden.

Die Schaltung zur Leistungsfaktorkorrektur (PFC-Schaltung) kann bei maximaler Helligkeit oder maximaler Last dauernd aktiviert sein. Insbesondere kann bei maximaler Helligkeit oder maximaler Last die Beeinflußung über die Steuereinheit 80 deaktiviert sein.

Die Beeinflussung der Betriebsweise durch eine zusätzliche Signalaufschaltung an dem Multipliziereingang M der Kontrolleinheit 81 kann mit der Netzspannung synchronisiert werden.

Vorzugsweise kann die Beeinflussung der Kontrolleinheit 81 abhängig von einem Signal (als Sollwertvorgabe), welches durch die Steuereinheit 80 über den Steueranschluß M-C aus der Netzspannung abgeleitet oder zur Netzspannung synchronisiert wird, erfolgen. Eine Ableitung aus der Netzspannung kann insbesondere erfolgen, wenn die Dimmwertvorgabe 8 über die Netzleitung übertragen wird.

Die PFC Schaltung (Schaltung zur Leistungsfaktorkorrektur) kann mehrere Ansteuerschaltungen zum Betreiben mindestens einer LED versorgen.

Die mehreren Ansteuerschaltungen können zum Betreiben verschiedenfarbiger LEDs genutzt werden.

Somit kann ein Beleuchtungssystem mit einer Vorrichtung zum Betreiben von LEDs gemäß der Erfindung aufgebaut werden. Das Beleuchtungssystem kann so aufgebaut sein, daß die Ansteuerschaltung durch eine Steuerschaltung gesteuert wird und die Steuerschaltung die Schaltung zur Leistungsfaktorkorrektur (PFC Schaltung) abhängig vom dem Signal eines Farbsensors wahlweise in einen von der normalen Betriebsweise abweichende Betriebsweise versetzt.

Über einen Steuerbefehl für die Steuerschaltung können die Aktivierungsparameter für die abweichende Betriebsweise eingestellt oder geändert werden.

Somit wird ein Verfahren zum Betreiben von LEDs ermöglicht, wobei eine Steuerschaltung die Schaltung zur Leistungsfaktorkorrektur abhängig vom anliegenden Helligkeitsbefehl oder Lastzustand wahlweise in einen von der normalen Betriebsweise abweichenden Betriebsweise versetzt.

Durch die zusätzliche, von der normalen Betriebsweise abweichende Betriebsweise kann das Beleuchtungssystem in einen erweiterten Helligkeitsbereich angesteuert werden und dem Nutzer steht somit ein flexibleres Beleuchtungssystem zur Verfügung. Gerade bei Anwendungen mit Farbmischung ist ein sehr weiter Helligkeitsbereich vorteilhaft, um eine möglichst große Vielfalt an zur Verfügung stehenden Mischverhältnissen zu erreichen.

## Patentansprüche

1. Verfahren zum Betrieb einer aktiv getakteten PFC-Schaltung (2) mit direkt oder indirekt angeschlossenem Lastkreis (4) am Ausgang der PFC-Schaltung (2), wobei:
- der Lastkreis ein Leuchtmittel (6), insbesondere eine oder mehrere LEDs aufweist, und
- der PFC-Schaltung (2) wenigstens ein Messsignal oder ein externes Steuersignal zugeführt wird, wobei das Messsignal die Leistungsaufnahme des Lastkreises (4) wiedergibt, wobei das externe Steuersignal die Leistungsaufnahme des Lastkreises (4) wiedergibt,
- die PFC-Schaltung (2) ausgehend von einer Netzspannung (Uᵢₙ) betrieben wird und die Leistungsaufnahme der PFC-Schaltung durch eine Taktung eines Schaltelements (S2) der PFC-Schaltung (2) vorgegeben wird, und
- eine Steuerschaltung (7) kontinuierlich oder vorzugweise in zwei oder mehr Stufen die Betriebsweise der PFC-Schaltung (2) abhängig von dem Steuersignal bzw. Messsignal einstellt, wobei die Steuerschaltung (7) erkennt, ob die Leistungsaufnahme des Lastkreises (4), die von dem Steuersignal bzw. Messsignal wiedergegeben wird, unterhalb eines vorgegebenen Schwellenwerts liegt,
**dadurch gekennzeichnet, dass,**
wenn die Leistungsaufnahme des Lastkreises (4) unterhalb eines vorgegebenen Schwellwerts liegt, die PFC-Schaltung (2) mit einem Impulszug getaktet wird, der zeitlich im Bereich des Scheitels der Netzspannung (Uᵢₙ) gestartet wird, wobei der Impulszug vor Erreichen des Nulldurchgangs der Netzspannung (Uᵢₙ) gestoppt wird und bis zum nächstfolgenden Impulszug eine Pause eingelegt wird.

2. Verfahren nach Anspruch 1, bei dem
- bei niedriger Leistungsaufnahme des Lastkreises (4) die PFC-Schaltung (2) gezielt nur während Zeitdauern betrieben wird, in denen die Netzspannungsamplitude hoch und vorzugsweise grösser als ein direkt oder indirekt gegebener Schwellenwert ist.

3. Verfahren nach einem der vorhergehenden Ansprüche,
bei der die Betriebsweise der PFC-Schaltung (2) durch Änderung einer Sollwertvorgabe für die über die Taktung der PFC-Schaltung (2) als Stellgröße geregelte Ausgangsspannung der PFC-Schaltung (2) verändert wird.

4. Verfahren nach einem der vorhergehenden Ansprüche, wobei, wenn das Messsignal bzw. Steuersignal eine Lastkreis-Leistungsaufnahme wiedergibt, die unterhalb des vorgegebenen Schwellenwerts liegt, die Betriebsweise der PFC-Schaltung (2) in einem diskreten Schritt verändert wird.

5. Verfahren nach einem der vorhergehenden Ansprüche, wobei der Lastkreis (4) eine getaktete Treiberschaltung (5) aufweist, deren Taktung mit der Taktung der PFC-Schaltung (2) synchronisiert ist.

6. Verfahren nach Anspruch 5,
bei dem die Treiberschaltung (5) PWM-moduliert ist und die Einschaltzeitdauer der Treiberschaltung (5) nur in Perioden erfolgt, in denen die PFC-Schaltung (2) mit Impulszügen aktiv getaktet ist, aber nicht in den Impulspausen zwischen zwei Impulszügen.

7. Integrierte Steuerschaltung, insbesondere ASIC oder Mikrokontroller, die zum Lastadaptiven Betrieb einer PFC-Schaltung gemäß einem der vorhergehenden Ansprüche ausgebildet ist.

8. Betriebsgerät für Leuchtmittel, insbesondere für eine oder mehrere LEDs, aufweisend:
- eine aktive getaktete PFC-Schaltung (2), und
- einen direkt oder indirekt am Ausgang der PFC-Schaltung angeschlossenen Lastkreis (4),
wobei:
der Lastkreis (4) ein Leuchtmittel (6), insbesondere eine oder mehrere LEDs aufweist,
- der PFC-Schaltung (2) wenigstens ein Messsignal oder ein externes Steuersignal zugeführt wird, wobei das Messsignal die Leistungsaufnahme des Lastkreises (4) wiedergibt, wobei das externe Steuersignal die Leistungsaufnahme des Lastkreises (4) wiedergibt,
- die PFC-Schaltung (2) ausgestaltet ist, ausgehend von einer Netzspannung (Uᵢₙ) betrieben zu werden, und die Leistungsaufnahme der PFC-Schaltung (2) durch eine Taktung eines Schaltelements (S2) der PFC-Schaltung (2) vorgesehen ist, und
- eine Steuerschaltung (7) dazu ausgebildet ist, kontinuierlich oder vorzugweise in zwei oder mehr Stufen die Betriebsweise der PFC-Schaltung (2) abhängig von dem Steuersignal bzw. Messsignal einzustellen, wobei die Steuerschaltung (7) ausgestaltet ist, zu erkennen, ob die Leistungsaufnahme des Lastkreises (4), die von dem Steuersignal bzw. Messsignal wiedergegeben wird, unterhalb eines vorgegebenen Schwellenwerts liegt,
**dadurch gekennzeichnet, dass,**
wenn die Leistungsaufnahme des Lastkreises (4) unterhalb eines vorgegebenen Schwellwerts liegt, die PFC-Schaltung (2) mit einem Impulszug getaktet wird, der zeitlich im Bereich des Scheitels der Netzspannung (Uᵢₙ) gestartet wird, wobei der Impulszug vor Erreichen des Nulldurchgangs der Netzspannung (Uᵢₙ) gestoppt wird und bis zum nächstfolgenden Impulszug eine Pause eingelegt wird.

9. Betriebsgerät nach Anspruch 8,
bei dem die Betriebsweise der PFC-Schaltung (2) durch Änderung einer Sollwertvorgabe für die über die Taktung der PFC-Schaltung (2) als Stellgröße geregelte Ausgangsspannung der PFC-Schaltung (2) veränderbar ist.

10. Betriebsgerät nach Anspruch 8 oder 9,
bei dem, wenn das Messsignal bzw. Steuersignal eine Lastkreis-Leistungsaufnahme wiedergibt, die unterhalb eines vorgegebenen Schwellenwerts liegt, die Betriebsweise der PFC-Schaltung (2) in einem diskreten Schritt veränderbar ist.

11. Betriebsgerät nach einem der Ansprüche 8 bis 10,
bei dem die Betriebsweise der PFC-Schaltung (2) durch eine zeitweise Deaktivierung der PFC-Schaltung (2) veränderbar ist.

12. Betriebsgerät nach einem der Ansprüche 8 bis 11,
**dadurch gekennzeichnet,**
**dass** die Beeinflussung durch eine zusätzliche Signalaufschaltung an einem der Erfassungsanschlüsse der Kontrolleinheit (81) der PFC-Schaltung oder durch Beeinflussung der Ansteuerung des Schalters (S2) der PFC-Schaltung erfolgt.

13. Betriebsgerät nach einem der Ansprüche 8 bis 12,
**dadurch gekennzeichnet,**
**dass** die Beeinflussung durch eine zusätzliche Signalaufschaltung an dem Multipliziereingang (M) der Kontrolleinheit (81) der PFC-Schaltung oder durch Beeinflussung der Ansteuerung des Schalters (S2) der PFC-Schaltung erfolgt.

14. Betriebsgerät nach einem der Ansprüche 8 bis 13,
**dadurch gekennzeichnet,**
**dass** die Beeinflussung der PFC-Schaltung (2) abhängig von einer Dimmwertvorgabe (8) erfolgt.

15. Beleuchtungssystem, aufweisend ein Leuchtmittel, insbesondere eine oder mehrere LEDs, sowie ein Betriebsgerät nach einem der Ansprüche 8 bis 14.

## Claims

1. A method for operating an actively clocked PFC circuit (2) with a load circuit (4) directly or indirectly connected to the output of the PFC circuit (2), wherein:
- the load circuit has a lighting means (6), in particular, one or several LEDs, and
- at least one measurement signal or an external control signal is supplied to the PFC circuit (2), wherein the measurement signal reflects the power consumption of the load circuit (4), wherein the external control signal reflects the power consumption of the load circuit (4),
- the PFC circuit (2) is operated based on a mains voltage (Uᵢₙ) and the power consumption of the PFC circuit is predetermined by a clocking of a switching element (S2) of the PFC circuit (2), and
- a control circuit (7) adjusts the operating mode of the PFC circuit (2) continuously or preferably in two or more stages depending on the control signal or measurement signal, wherein the control circuit (7) detects whether the power consumption of the load circuit (4), which is reflected by the control signal or measurement signal, is below a predetermined threshold value,
**characterized in that,**
if the power consumption of the load circuit (4) is below a predetermined threshold value, the PFC circuit (2) is clocked with a pulse train, which is started in terms of time in the region of the peak of the mains voltage (Uᵢₙ), wherein the pulse train is stopped before reaching the zero-crossing of the mains voltage (Uᵢₙ) and a pause is introduced until the next pulse train.

2. A method according to claim 1, in which
- when the power consumption of the load circuit (4) is low the PFC circuit (2) is operated selectively only during time periods, in which the mains voltage amplitude is high or preferably is greater than a directly or indirectly given threshold value.

3. A method according to any one of the preceding claims,
in which the mode of operation of the PFC circuit (2) is changed by changing a target-value specification for the output voltage of the PFC circuit (2) regulated as a control variable by means of the clocking of the PFC circuit (2).

4. A method according to any one of the preceding claims,
wherein, if the measurement signal or control signal reflects a load circuit power consumption, which is below the predetermined threshold value, the mode of operation of the PFC circuit (2) is changed in a discrete step.

5. A method according to any one of the preceding claims,
wherein the load circuit (4) has a clocked driver circuit (5), the clocking of which is synchronized with the clocking of the PFC circuit (2).

6. A method according to claim 5, in which the driver circuit (5) is pulse width modulated (PWM) and the switching-on time duration of the driver circuit (5) occurs only in periods, in which the PFC circuit (2) is actively clocked with pulse trains, but not in the pulse pauses between two pulse trains.

7. An integrated control circuit, in particular, ASIC or micro-controller, which is designed for load-adaptive operation of a PFC circuit according to any one of the preceding claims.

8. An operating device for light means, in particular for one or several LEDs, having:
- an actively clocked PFC circuit (2), and
- a load circuit (4) connected directly or indirectly at the output of the PFC circuit, wherein:
the load circuit (4) has a lighting means (6), in particular, one or several LEDs,
- at least one measurement signal or an external control signal is supplied to the PFC circuit (2), wherein the measurement signal reflects the power consumption of the load circuit (4), wherein the external control signal reflects the power consumption of the load circuit (4),
- the PFC circuit (2) is designed to be operated based on a mains voltage (Uᵢₙ), and the power consumption of the PFC circuit (2) is provided by a clocking of the switching element (S2) of the PFC circuit (2), and
- a control circuit (7) is designed to adjust the mode of operation of the PFC circuit (2) continuously or preferably in two or more stages depending on the control signal or measurement signal, wherein the control circuit (7) is designed to detect whether the power consumption of the load circuit (4), which is reflected by the control signal or measurement signal, is below a predetermined threshold value,
**characterized in that**
if the power consumption of the load circuit (4) is below a predetermined threshold value, the PFC circuit (2) is clocked with a pulse train, which is started in terms of time in the region of the peak of the mains voltage (Uᵢₙ), wherein the pulse train is stopped before reaching the zero-crossing of the mains voltage (Uᵢₙ) and a pause is introduced until the next pulse train.

9. An operating device according to claim 8,
in which the mode of operation of the PFC circuit (2) can be changed by changing a target-value specification for the output voltage of the PFC circuit (2) regulated as a control variable by means of the clocking of the PFC circuit (2).

10. An operating device according to claim 8 or 9,
in which, if the measurement signal or control signal reflects a load circuit power consumption, which is below a predetermined threshold value, the mode of operation of the PFC circuit (2) can be changed in a discrete step.

11. An operating device according to any one of claims 8 to 10,
in which the mode of operation of the PFC circuit (2) can be changed by a temporary deactivation of the PFC circuit (2).

12. An operating device according to any one of claims 8 to 11, **characterized in that** the influencing takes place by an additional signal application to one of the detection terminals of the control unit (81) of the PFC circuit or by influencing the control of the switch (S2) of the PFC circuit.

13. An operating device according to any one of claims 8 to 12,
**characterized in**
**that** the influencing takes place by an additional signal application to the multiplying input (M) of the control unit (81) of the PFC circuit or by influencing the control of the switch (S2) of the PFC circuit.

14. An operating device according to any one of claims 8 to 13,
**characterized in**
**that** the influencing of the PFC circuit takes place depending on a dimming value specification (8).

15. An illumination system, having a lighting means, in particular, one or several LEDs, as well as an operating device according to any one of claims 8 to 14.

## Revendications

1. Procédé de fonctionnement d'un circuit PFC (2) cadencé activement, avec un circuit de charge (4) connecté directement ou indirectement, à la sortie du circuit PFC (2),
- le circuit de charge présentant un moyen d'éclairage (6), en particulier une ou plusieurs LED, et
- au moins un signal de mesure ou un signal de commande externe étant acheminé au circuit PFC (2), le signal de mesure représentant la puissance absorbée du circuit de charge (4), le signal de commande externe représentant la puissance absorbée du circuit de charge (4),
- le circuit PFC (2) étant actionné à partir d'une tension de secteur (Uᵢₙ), et la puissance absorbée du circuit PFC étant prédéfinie par un cadencement d'un élément de commutation (S2) du circuit PFC (2), et
- un circuit de commande (7) réglant de façon continue ou de préférence en deux étapes ou plus le mode de fonctionnement du circuit PFC (2) en fonction du signal de commande ou respectivement du signal de mesure, le circuit de commande (7) détectant si la puissance absorbée du circuit de charge (4) qui est représentée par le signal de commande ou respectivement par le signal de mesure, est inférieure à une valeur de seuil prédéfinie,
**caractérisé en ce que,**
quand la puissance absorbée du circuit de charge (4) est inférieure à une valeur de seuil prédéfinie, le circuit PFC (2) est cadencé avec un train d'impulsions qui est lancé temporellement dans la zone de la crête de la tension de secteur (Uiₙ), le train d'impulsions étant arrêté avant d'atteindre le passage par zéro de la tension de secteur (Uᵢₙ), et une pause étant insérée jusqu'au train d'impulsions suivant.

2. Procédé selon la revendication 1, dans lequel
- en présence d'une faible puissance absorbée du circuit de charge (4), le circuit PFC (2) n'est activé de façon ciblée que pendant des durées dans lesquelles l'amplitude de tension de secteur est élevée et de préférence supérieure à une valeur de seuil qui est donnée directement ou indirectement.

3. Procédé selon l'une des revendications précédentes, dans lequel le mode de fonctionnement du circuit PFC (2) est modifié par la modification d'une valeur de seuil de consigne pour la tension de sortie du circuit PFC (2) réglée en tant que grandeur réglante par le biais du cadencement du circuit PFC (2).

4. Procédé selon l'une des revendications précédentes, dans lequel, quand le signal de mesure ou respectivement le signal de commande représente une puissance absorbée du circuit de charge qui est inférieure à la valeur de seuil prédéfinie, le mode de fonctionnement du circuit PFC (2) est modifié selon un pas discret.

5. Procédé selon l'une des revendications précédentes, le circuit de charge (4) présentant un circuit d'attaque (5) cadencé dont le cadencement est synchronisé avec le cadencement du circuit PFC (2).

6. Procédé selon la revendication 5,
dans lequel le circuit d'attaque (5) est modulé en durée d'amplitude, et la durée de mise en circuit du circuit d'attaque (5) n'intervient que dans des périodes dans lesquelles le circuit PFC (2) est cadencé activement avec des trains d'impulsions mais pas pendant les pauses d'impulsions entre deux trains d'impulsions.

7. Circuit de commande intégré, en particulier ASIC ou microcontrôleur, qui est constitué pour le fonctionnement, s'adaptant à la charge, d'un circuit PFC selon l'une des revendications précédentes.

8. Appareil de commande pour moyens d'éclairage, en particulier pour une ou plusieurs LED, présentant :
- un circuit PFC (2) cadencé activement, et
- un circuit de charge (4), connecté directement ou indirectement, à la sortie du circuit PFC,
le circuit de charge (4) présentant un moyen d'éclairage (6), en particulier une ou plusieurs LED,
- au moins un signal de mesure ou un signal de commande externe étant acheminé au circuit PFC (2), le signal de mesure représentant la puissance absorbée du circuit de charge (4), le signal de commande externe représentant la puissance absorbée du circuit de charge (4),
- le circuit PFC (2) étant constitué pour être activé à partir d'une tension de secteur (Uᵢₙ), et la puissance absorbée du circuit PFC étant prévue par un cadencement d'un élément de commutation (S2) du circuit PFC (2), et
- un circuit de commande (7) étant constitué pour régler de façon continue ou de préférence en deux étapes ou plus le mode de fonctionnement du circuit PFC (2) en fonction du signal de commande ou respectivement du signal de mesure, le circuit de commande (7) étant constitué pour détecter si la puissance absorbée du circuit de charge (4) qui est représentée par le signal de commande ou respectivement par le signal de mesure, est inférieure à une valeur de seuil prédéfinie,
**caractérisé en ce que,**
quand la puissance absorbée du circuit de charge (4) est inférieure à une valeur de seuil prédéfinie, le circuit PFC (2) est cadencé avec un train d'impulsions qui est lancé temporellement dans la zone de la crête de la tension de secteur (Uᵢₙ), le train d'impulsions étant arrêté avant d'atteindre le passage par zéro de la tension de secteur (Uᵢₙ), et une pause étant insérée jusqu'au train d'impulsions suivant.

9. Appareil de commande selon la revendication 8,
dans lequel le mode de fonctionnement du circuit PFC (2) peut être modifié par la modification d'une valeur de seuil de consigne pour la tension de sortie du circuit PFC (2) réglée en tant que grandeur réglante par le biais du cadencement du circuit PFC (2).

10. Appareil de commande selon la revendication 8 ou 9,
dans lequel, quand le signal de mesure ou respectivement le signal de commande représente une puissance absorbée du circuit de charge qui est inférieure à une valeur de seuil prédéfinie, le mode de fonctionnement du circuit PFC (2) peut être modifié selon un pas discret.

11. Appareil de commande selon l'une des revendications 8 à 10,
dans lequel le mode de fonctionnement du circuit PFC (2) peut être modifié par une désactivation temporaire du circuit PFC (2).

12. Appareil de commande selon l'une des revendications 8 à 11,
**caractérisé en ce que**
l'influence exercée s'effectue par une application de signal supplémentaire sur une des connexions de détection de l'unité de contrôle (81) du circuit PFC ou par l'influence exercée sur le pilotage du commutateur (S2) du circuit PFC.

13. Appareil de commande selon l'une des revendications 8 à 12,
**caractérisé en ce que**
l'influence exercée s'effectue par une application de signal supplémentaire sur l'entrée de multiplication (M) de l'unité de contrôle (81) du circuit PFC ou par l'influence exercée sur le pilotage du commutateur (S2) du circuit PFC.

14. Appareil de commande selon l'une des revendications 8 à 13,
**caractérisé en ce que**
l'influence exercée sur le circuit PFC (2) s'effectue en fonction d'une valeur de consigne de gradation(8).

15. Système d'éclairage, présentant un moyen d'éclairage, en particulier une ou plusieurs LED, ainsi qu'un appareil de commande selon l'une des revendications 8 à 14.
